**Europäisches Patentamt**

**European Patent Office**

**Office européen des brevets**

(19)

(11) Numéro de publication: **0 165 090**

**A1**

(12)

# DEMANDE DE BREVET EUROPEEN

(21) Numéro de dépôt: 85400796.0

(22) Date de dépôt: 23.04.85

(51) Int. Cl.⁴: **F 24 D 3/00**
**F 24 H 1/22**

(30) Priorité: 26.04.84 FR 8406609

(43) Date de publication de la demande:
**18.12.85 Bulletin 85/51**

(84) Etats contractants désignés:
**AT BE CH DE GB IT LI LU NL SE**

(71) Demandeur: **ROSSIGNOL S.A. Société dite:**

**F-53150 Montsurs(FR)**

(72) Inventeur: **Beuve, Yves**
**La Beslières**
**F-50320 La Haye Pesnel(FR)**

(72) Inventeur: **Borghelot, Eddy**
**L'Ebaudière Saint Christophe du Luat**
**F-53150 Montsurs(FR)**

(72) Inventeur: **Klepka, Henry**
**10 Rue de Maulny**
**F-53600 Evron(FR)**

(72) Inventeur: **Lantz, Eric**
**15 Rue du Marchis**
**F-53150 Montsurs(FR)**

(72) Inventeur: **Suzenne, Daniel**
**Route de Neau**
**F-53600 Evron(FR)**

(74) Mandataire: **Polus, Camille et al,**
**c/o Cabinet Lavoix 2, Place d'Estienne d'Orves**
**F-75441 Paris Cedex 09(FR)**

(54) Générateur de chaleur utilisant deux sources d'énergie.

(57) L'invention a pour objet un générateur de chaleur utilisant comme sources d'énergie de l'énergie électrique de combustion d'un combustible fossile, caractérisé en ce qu'il comprend: une chadière (2) à foyer horizontal (4) alimentée par ledit combustible fossile, le corps (7) de cette chaudière supportant à sa partie supérieure une pompe à chaleur de type eau/eau qui cède dans son codenseur (15) la chaleur du fluide intermédiaire condensé à l'eau alimentant la chaudière (2).

FIG.1

EP 0 165 090 A1

La présente invention concerne un générateur de chaleur utilisant deux sources d'énergie et plus particulièrement un générateur de chaleur utilisant comme source d'énergie de l'énergie électrique et l'énergie de combustion d'un combustible fossile (notamment liquide ou gazeux).

On a cherché à développer les générateurs de chaleur utilisant d'autres sources d'énergie que l'énergie provenant de la combustion de combustibles fossiles. C'est ainsi notamment qu'on a développé les pompes à chaleur. Dans un grand nombre de régions, des pompes à chaleur ne sont pas suffisantes et l'on utilise conjointement une pompe à chaleur et une chaudière classique à combustible liquide ou gazeux.

La présente invention vise à simplifier les installations de chauffage en fournissant un générateur intégré utilisant deux sources d'énergie.

A cet effet, la présente invention a pour objet un générateur de chaleur utilisant comme sources d'énergie de l'énergie électrique et l'énergie de combustion d'un combustible fossile, caractérisé en ce qu'il comprend une chaudière à foyer horizontal alimenté par ledit combustible fossile, le corps de cette chaudière supportant à sa partie supérieure une pompe à chaleur de type eau/eau qui cède dans son condenseur la chaleur du fluide intermédiaire condensé à l'eau alimentant la chaudière.

Le condenseur, généralement de type hélicoïdal, peut avoir plusieurs configurations possibles.

Ce condenseur peut être de type coaxial, de forme hélicoïdale, disposé dans une enceinte supportée par la chaudière et comprenant également l'évaporateur.

Le condenseur peut être également un monotube

2. 0165090

hélicoïdal plongeant dans l'eau de la chaudière. Dans ce cas, il peut être enroulé en spirale autour d'une enceinte étanche comprenant l'évaporateur de la pompe à chaleur ou être disposé sous l'enceinte comprenant l'évaporateur de la pompe à chaleur.

La chaudière est avantageusement une chaudière à foyer borgne, comprenant un récupérateur de chaleur sur les fumées.

L'invention est exposée ci-après plus en détail à l'aide de dessins représentant seulement des modes de réalisation.

Sur ces dessins :

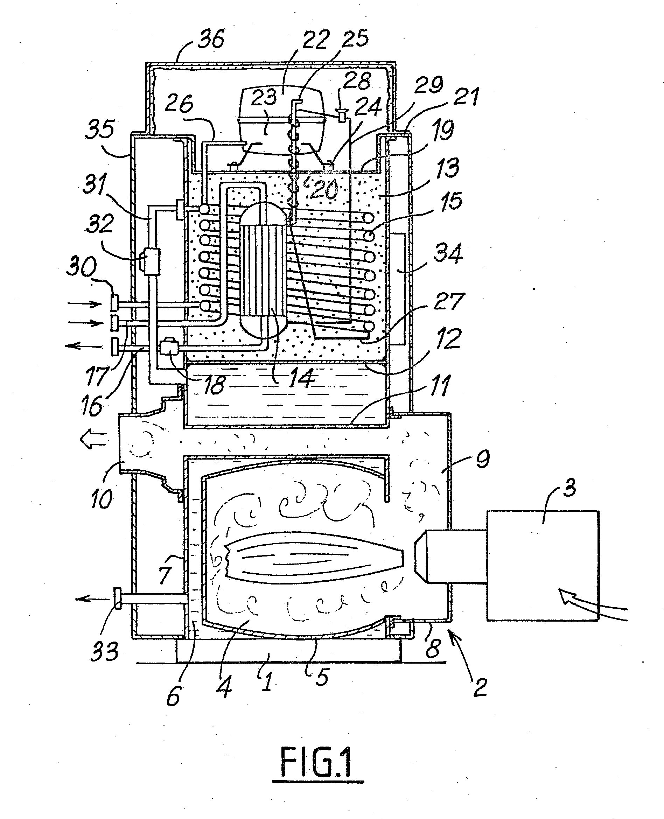

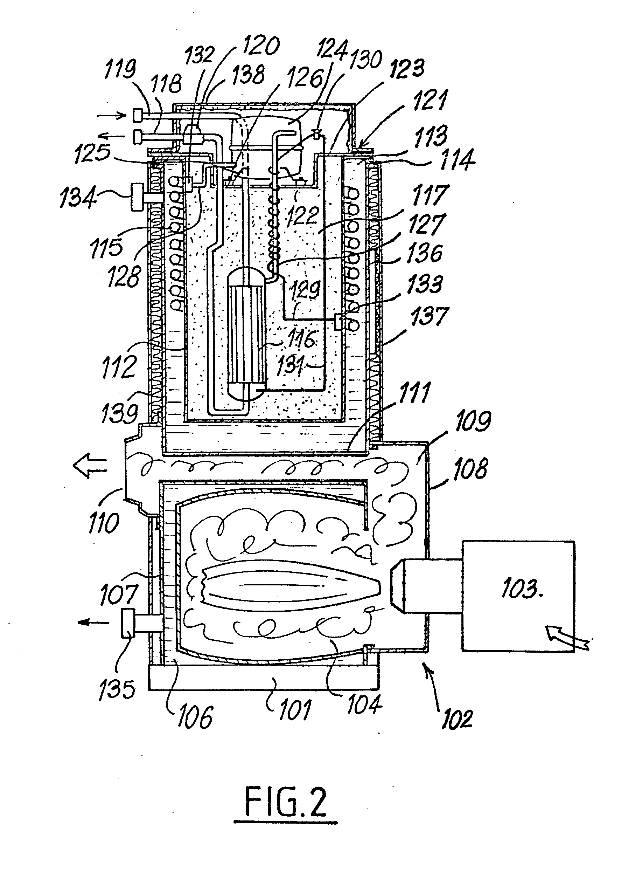

les Fig. 1 et 2 sont des vues schématiques en coupe de trois modes de réalisation de générateurs de chaleur selon la présente invention.

Le générateur de chaleur représenté sur la Fig. 1 comprend un socle 1 sur lequel repose une chaudière 2. La chaudière 2 comprend un brûleur 3, par exemple un brûleur à fuel, et un foyer 4 de type borgne, délimité par une surface de chauffe 5 en acier, d'axe horizontal. La surface de chauffe 5 est entourée par une enceinte 6 délimitée par une enveloppe verticale 7 en acier reposant sur le socle 1 et formant le corps de la chaudière. Le brûleur 3 est soutenu par un carter 8 en acier fixé à l'enveloppe 7, qui délimite en même temps une boîte à fumée 9 par laquelle sortent les fumées provenant du foyer borgne 4.

Avant d'être évacuées vers la cheminée de la chaudière par un orifice 10 disposé à l'arrière de la chaudière, les fumées traversent un récupérateur de chaleur 11 constitué par exemple par des tubes traversant l'enceinte 6 au-dessus du foyer 4.

La partie supérieure de l'enceinte 6 est fermée par une plaque horizontale 12 en acier.

L'enveloppe 7 se prolonge au-delà de l'enceinte 6 pour former une autre enceinte 13 au-dessus de l'enceinte 6.

Dans cette enceinte 13, sont fixés des éléments d'une pompe à chaleur de type eau/eau, à savoir un évaporateur à plaques 14 et un condenseur 15 de type coaxial et de forme hélicoïdale qui entoure l'évaporateur 14.

L'évaporateur 14 est relié par des conduits 16 et 17 à une source froide extérieure. Le fluide frigoporteur est véhiculé dans ces conduits et dans l'évaporateur 14 par une pompe 18.

L'enceinte 13 est fermée à sa partie supérieure par un couvercle 19 dont la partie centrale 20 est plus basse que les bords 21 qui reposent sur l'enveloppe 7. Sur la partie centrale 20 repose un compresseur 22 par l'intermédiaire de pattes 23 munies d'amortisseurs élastiques 24.

Le fluide intermédiaire de la pompe à chaleur est amené de l'évaporateur 14 au compresseur 22 par un conduit 25 et du compresseur 22 au conduit 15 par un conduit 26. A la sortie du condenseur 15, le fluide intermédiaire est amené par un conduit 27, qui entoure en spirale sur une partie de son trajet le conduit 25, vers un détendeur thermostatique 28 disposé au-dessus du couvercle 19 et est ramené à l'évaporateur 14 par un conduit 29.

L'eau à réchauffer est amenée par un conduit 30 au condenseur 15 et évacuée du condenseur 15 par un conduit 31 muni d'une pompe 32 qui débouche à la partie supérieure de l'enceinte 6. L'eau de chauffage est évacuée de l'enceinte 6 à sa partie supérieure par un conduit 33.

Le générateur de chaleur comprend par ailleurs une unité de commande 34. L'ensemble est entouré d'un habillage 35 et est surmonté d'un capot 36 recouvert intérieurement d'un isolant phonique.

Enfin, dans l'enceinte 13 est injectée une mousse semi-rigide qui contribue à la fois au blocage des composants les uns par rapport aux autres, à l'isolation thermique et à l'isolation phonique des composants. La mousse semi-rigide peut être notamment une mousse de polyuréthanne à cellules ouvertes, ayant une résistance à la traction de 1,5 à 2,3.10$^5$ Pa, un allongement à la rupture de 70 à 95 % et une masse spécifique apparente de 30 à 90 kg/m³.

On a représenté sur la Fig. 2 un autre mode de réalisation d'un générateur selon la présente invention.

La partie inférieure du générateur de chaleur représenté sur la Fig. 2 est semblable à celle du générateur représenté sur la Fig. 1. Ainsi, il comprend un socle 101 sur lequel repose une chaudière 102. La chaudière 102 comprend un brûleur 103, et un foyer 104 de type borgne, délimité par une surface de chauffe 105 en acier, d'axe horizontal. La surface de chauffe 105 est entourée par une enceinte 106 délimitée par une enveloppe verticale 107 en acier reposant sur le socle 101 et formant le corps de la chaudière. Le brûleur 103 est soutenu par un carter 108 en acier fixé à l'enveloppe 107, qui délimite en même temps une boîte à fumée 109 par laquelle sortent les fumées provenant du foyer borgne 104.

Avant d'être évacuées vers la cheminée de la chaudière par un orifice 110 disposé à l'arrière de la chaudière, les fumées traversent un récupérateur de chaleur 111.

A l'intérieur de la partie supérieure de l'enceinte 106 est disposée une enveloppe étanche 112 de forme cylindrique qui repose par une collerette 113 périphérique supérieure sur le haut de l'enveloppe 107.

L'étanchéité du haut de l'enceinte 106 est assurée par un joint 114 disposé entre le haut de l'enveloppe 107 et la collerette 113 qui est plongé ainsi dans l'eau de la chaudière.

L'enceinte 112 est entourée par un condenseur 115 hélicoïdal de type monotube comportant des ailettes intérieures et extérieures. Ce condenseur 115 fait partie d'une pompe à chaleur de type eau/eau, qui comprend un évaporateur à plaques 116 disposé à l'intérieur de

5.

l'enceinte 106 définie par l'enveloppe 112.

Comme dans le cas du générateur de la Fig. 1 l'évaporateur 116 est relié par des conduits 118 et 119 à une source froide extérieure. Le fluide frigoporteur est véhiculé dans ces conduits et dans l'évaporateur 14 par une pompe 120.

L'enceinte 117 est fermée à sa partie supérieure par un couvercle 121 dont la partie centrale 122 est plus basse que les bords 123 qui reposent sur la collerette 113. La partie centrale 122 repose sur un compresseur 124 par l'intermédiaire de pattes 125 munies d'amortisseurs élastiques 126.

Comme dans le cas du générateur de la Fig. 1, le fluide intermédiaire de la pompe à chaleur est amené de l'évaporateur 116 au compresseur 124 par un conduit 127 et du compresseur 124 au condenseur 115 par un conduit 128. A la sortie du condenseur 115, le fluide intermédiaire est amené par un conduit 129, qui entoure en spirale sur une partie de son trajet le conduit 127, vers un détendeur thermostatique 130 disposé au-dessus du couvercle 121 et est ramené à l'évaporateur 116 par un conduit 131.

Les conduits 128 et 129 traversent l'enveloppe 112 par l'inrermédiaire de raccords 132 et 133.

L'eau à réchauffer est amenée par un conduit 134 à la partie supérieure de l'enceinte 106 et évacuée de cette enceinte par un conduit 135.

Le générateur de chaleur comprend par ailleurs une unité de commande 136. L'ensemble est entouré d'un habillage 137 et est surmonté d'un capot 138 recouvert intérieurement d'un isolant phonique.

L'espace existant entre la partie supérieure de l'enceinte 107 et l'habillage 113 est rempli d'un matériau isolant 139.

Enfin, dans l'enceinte 112 est injectée une mousse semi-rigide comme dans l'enceinte 13 de la Fig. 1.

6.

Les sources thermiques de la pompe à chaleur sont:

- pour la source froide: l'énergie solaire captée dans les différents éléments environnant le local à chauffer, à savoir l'air ambiant extérieur, le sol à une profondeur suffisante ou la nappe phréatique; et

- pour la source chaude: l'air ambiant intérieur du local à chauffer au travers du système de chauffage à eau chaude de la chaudière.

Le dimensionnement du générateur est réalisé de telle manière que la pompe à chaleur intégrée fournisse environ 80 % de l'échange calorifique nécessaire pour assurer les besoins de chauffage, le complément étant assuré par le brûleur intégré au générateur. Le système complet permet ainsi une utilisation intensive mais très rationnelle de l'énergie électrique disponible à une tarification intéressante, et de libérer le réseau électrique lorsque celui-ci est trop chargé en période froide au profit de l'utilisation d'un combustible stockable, l'utilisation de ce combustible restant d'ailleurs faible en volume calorique, ce qui correspond à une limitation des importations pétrolières.

La gestion du fonctionnement automatique de l'ensemble est assurée à partir d'une même unité de commande recevant les informations logiques ou physiques d'exploitation (informations EDF ou utilisateur et température de chauffage).

# REVENDICATIONS

1. Générateur de chaleur utilisant comme sources d'énergie de l'énergie électrique et l'énergie de combustion d'un combustible fossile, caractérisé en ce qu'il comprend : une chaudière (2,102) à foyer horizontal (4,104) alimentée par ledit combustible fossile, le corps (7,107) de cette chaudière supportant à sa partie supérieure une pompe à chaleur de type eau/eau qui cède dans son condenseur (15,115) la chaleur du fluide intermédiaire condensé à l'eau alimentant la chaudière (2,102).

2. Générateur de chaleur selon la revendication 1, caractérisé en ce que le condenseur (15) de la pompe à chaleur est de type coaxial.

3. Générateur de chaleur selon la revendication 1, caractérisé en ce que le condenseur (115) de la pompe à chaleur est constitué par un monotube hélicoïdal plongeant dans l'eau de la chaudière.

4. Générateur de chaleur selon la revendication 3, caractérisé en ce que le monotube est un tube enroulé en spirale autour d'une enceinte étanche (117) comprenant l'évaporateur (116) de la pompe à chaleur.

5. Générateur de chaleur selon l'une quelconque des revendications 1 à 4, caractérisé en ce que la chaudière (2,102) est du type à foyer borgne.

6. Générateur de chaleur selon l'une quelconque des revendications 1 à 5, caractérisé en ce que la chaudière (2,102) comprend un récupérateur (11,111) de chaleur sur les fumées.

**FIG.1**

FIG.2

**0165090**
Numero de la demande

Office européen
des brevets

**RAPPORT DE RECHERCHE EUROPEENNE**

EP 85 40 0796

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl 4) |
|---|---|---|---|
| A | EP-A-0 029 219 (MÜLLER) <br> * Abrégé * | 1,2 | F 24 D 3/00 <br> F 24 H 1/22 |
| A | DE-A-2 601 414 (ROSEL) <br><br> * En entier * | 1,3,5, 6 | |

DOMAINES TECHNIQUES
RECHERCHES (Int. Cl.4)

Le présent rapport de recherche a eté etabli pour toutes les revendications

| Lieu de la recherche | Date d achevement de la recherche | Examinateur |
|---|---|---|
| LA HAYE | 01-07-1985 | VAN GESTEL H.M. |